(19) Europäisches Patentamt
European Patent Office
Office européen des brevets

(11) Veröffentlichungsnummer : **0 248 255 B1**

(12) **EUROPÄISCHE PATENTSCHRIFT**

(45) Veröffentlichungstag der Patentschrift : **28.08.91 Patentblatt 91/35**

(51) Int. Cl.$^5$ : **C08F 285/00,** C08F 279/02, C08F 265/04, C08L 77/00

(21) Anmeldenummer : **87107167.6**

(22) Anmeldetag : **18.05.87**

# (54) Thermoplastische Pfropfpolymerisate.

(30) Priorität : **27.05.86 DE 3617720**

(43) Veröffentlichungstag der Anmeldung : **09.12.87 Patentblatt 87/50**

(45) Bekanntmachung des Hinweises auf die Patenterteilung : **28.08.91 Patentblatt 91/35**

(84) Benannte Vertragsstaaten : **DE FR GB IT NL**

(56) Entgegenhaltungen :
**EP-A- 0 176 012**
**EP-A- 0 208 187**
**DE-A- 3 200 070**
**FR-A- 2 010 217**

(73) Patentinhaber : **BAYER AG**
**W-5090 Leverkusen 1 Bayerwerk (DE)**

(72) Erfinder : **Lindner, Christian, Dr.**
**Riehler Strasse 200**
**W-5000 Köln 60 (DE)**
Erfinder : **Wittmann, Dieter, Dr.**
**Doerperhofstrasse 15**
**W-4150 Krefeld (DE)**

**EP 0 248 255 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung thermoplastisch verarbeitbarer, teilchenförmiger Pfropfpolymerisate einer bestimmten heterogenen Struktur und chemischer Zusammensetzung; sowie thermoplastische Formmassen aus Polyamiden und diesen Pfropfpolymerisaten.

Formmassen aus Polyamiden haben besonders gute Eigenschaften, z.B. Steifigkeit, Zähigkeit, Spannungskorrosions- und Lösungsmittelbeständigkeit. Für manche Anwendungen reicht jedoch die Zähigkeit, insbesondere Kerbschlagzähigkeit, nicht aus.

Aus der DE-OS 2 742 176 ist bekannt, daß man die Kerbschlagzähigkeit von Polyamiden durch Zusatz von 5 bis 40 Gew.-% eines vernetzten Pfropfpolymerisates beträchtlich steigern kann. Als Pfropfpolymerisate werden mit Estern der Methacrylsäure gepfropfte vernetzte Polybutadiene empfohlen.

Aus der DE-OS 3 200 070 und der DE-OS 2 144 528 sind Mischungen aus Polyamiden und Pfropfpolymerisaten auf Acrylatkautschukbasis bekannt. Solche Pfropfpolymerisate sind heterogener Natur, das heißt, sie enthalten zwei verschiedene Polymere; ihre Kombination ist z.B. durch Pfropfreaktion möglich.

Es wurde gefunden, daß bestimmte Pfropfpolymerisate, in denen zwei oder mehr Polymerisate mit einer Pfropfbasis kombiniert sind, verbesserte Thermoplasteigenschaften aufweisen und, daß sich diese Polymerisate mit Polyamid zu Formmassen sehr guter Stabilität gegen praxisnahe Schlagbeanspruchung legieren lassen.

Gegenstand der Erfindung ist ein

Verfahren zur Herstellung thermoplastisch verarbeitbarer Pfropfpolymerisate aus

(a) 50 - 90 Gew.-Teilen eines teilchenförmigen, wenigstens partiell vernetzten Kautschuk mit Gelgehalt größer als 30 Gew.-% und mittlerem Teilchendurchmesser von 80-2000 nm als Pfropfgrundlage und

(b) 50 - 10 Gew.-Teilen von darauf gepfropften Polymerisaten von Vinylmonomeren, welche sich aus

 b1) 80 - 20 Gew.-% eines Polymerisats von Styrol, α-Methylstyrol, Acrylnitril, Alkylacrylat, Alkylmethacrylat oder Mischungen daraus und

 b2) 20 - 80 Gew.-% eines Polymerisats von Alkylmethacrylat, Alkylacrylat, Acrylnitril oder Mischungen daraus zusammensetzen,

wobei die Polymerisat b1) und b2) voneinander verschieden sind, in dem man auf einen als Emulsion vorliegenden Kautschuk (a) die das Polymerisat (b1) bildenden Monomeren bei Temperaturen von 20 bis 90 °C mit Hilfe von Radikale erzeugenden Initiatoren und gegebenenfalls unter Zusatz von Emulgatoren, Dispergatoren und/oder Reglern in Emulsion pfropfpolymerisiert, die so erhaltene Emulsion durch Einwirkung von Elektrolyten, Scherkräften oder Wärme agglomeriert oder koaguliert und in einer zweiten Stufe die das Polymerisat (b2) bildenden Monomeren auf die in Wasser suspendierten Teilchen der agglomerierten oder koagulierten Emulsion bei Temperaturen von 30 bis 100 °C mit Hilfe von Radikalinitiatoren und gegebenenfalls Reglern pfropfpolymerisiert und sodann das gebildete Pfropfpolymerisat abtrennt und trocknet.

Gegenstand der Erfindung sind ebenfalls die so erhaltenen thermoplastisch verarbeitbaren Pfropfpolymerisate und deren Verwendung als Zusatz zu Polyamid in einer Menge von 1-45 Gew.-% bezogen auf die Mischung.

Geeignete Kautschuke sind teilchenförmig und wenigstens partiell vernetzt; sie besitzen Gelgehalte (als Maß der Vernetzung) von größer 30 Gew.-%, insbesondere größer 60 Gew.-%, und mittlere Teilchendurchmesser ($d_{50}$) von 80 nm bis 2000 nm, insbesondere 100 nm bit 800 nm. vor zugsweise 150 nm bis 500 nm.

Als Kautschuke sind beispielsweise geeignet: Homo- und Copolymerisate von konjugierten Dienen und Alkylacrylaten. Bevorzugt sind Butadienkautschuke mit bis zu 45 Gew.-% copolymerisierten Monomeren aus der Reihe Styrol, Acrylnitril, Methylmethacrylat, Alkylacrylat.

Als Acrylatkautschuke sind bevorzugt Polymerisate aus Acrylsäurealkylestern, gegebenenfalls mit bis zu 40 Gew.-% anderen polyerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, Octyl- und 2-Ethylhexylester; Halogenalkylester, vorzugsweise Halogen-$C_1$-$C_8$-alkylester, wie Chlorethylacrylat, und aromatische Ester wie Benzylacrylat und Phenethylacrylat. Sie können einzeln öder in Mischung eingesetzt werden.

Zur Vernetzung der Kautschuke können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen mit ungesättigten einwertigen Alkoholen mit 3 bis 12 C-Atomen oder gesättigten Polyolen mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat und -isocyanurat, Tris-acryloyl-s-triazine, insbesondere Triallylcyanurat; polyfunktionelle Vinylverbindungen, wie Di- und Trivinylbenzole; aber auch Triallylphosphat und Diallylphthalat.

Bevorzugte vernetztende Monomere sind Allylmethacrylat, Ethylenglykoldimethacrylat, Diallylphthalat und

heterocyclische Verbindungen, die mindestens drei ethylenisch ungesättigte Gruppen aufweisen.

Besonders bevorzugte vernetzende Monomeren sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%-, bezogen auf Kautschuk.

Bevorzugte polymerisierbare, ethylenisch ungesättigte Monomere, die neben den Acrylsäureestern gegebenenfalls zur Herstellung der Kautschuke (a) dienen können, sind z.B. Acrylnitril, Styrol, α-Methylstyrol, Acrylamide, Vinyl-$C_1$-$C_6$-Alkylether. Bevorzugte Acrylatkautschuke als Pfropfgrundlage (a) sind Emulsionspolymerisate, die einen Gelgehalt von ≧ 60 Gew.-% aufweisen.

Besonders bevorzugte Kautschuke a) im Sinne der Erfindung sind Acrylatkautschuke. Dies schließt solche Acrylatkautschuke ein, die eine Kern/Mantel-Struktur haben, d. h. einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril als Kern und ein Acrylatpolymer als Mantel. Solche Acrylatkautschuke sind sogar besonders geeignet.

Die Kautschuke a) liegen teilchenförmig, d. h. in einer Emulsion oder Dispersion in einem geeigneten Medium, insbesondere Wasser, vor und können durch Polymerisation in Emulsion oder Dispersion hergestellt werden.

Die die Polymerisate (b) bildenden Vinylmonomeren ("Pfropfmonomere"), können aus Styrol, Acrylnitril, α-Methylstyrol, Alkyl-methacrylaten mit bis zu 12 C-Atomen im Molekül, Alkylacrylaten mit bis zu 12 C-Atomen im Molekül, wobei die Alkylgruppen der Ester gegebenenfalls mit Urethan-Gruppen substituiert sein können, z. B. Monomere

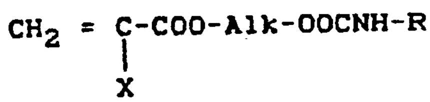

mit

X = H, $CH_3$

Alk = C2-8-Alkylen

R = C1-12-Alkyl

oder deren Mischungen ausgewählt werden.

In den erfindungsgemäßen Pfropfpolymerisaten setzen sich die Polymerisate (b) zusammen aus einem Polymerisat (b1) und einem Polymerisat (b2), die sich in ihrer chemischen Zusammensetzung voneinander unterscheiden müssen. Wenn beispielsweise (b1) ein Homopolymerisat eines der genannten Vinylmonomeren ist, dann muß (b2) ein Homopolymerisat eines anderen Vinylmonomeren sein, oder ein Copolymerisat. Handelt es sich bei (b1) um ein Copolymerisat, so kann (b2) ein anders zusammengesetztes Copolymerisat (auch anderer Vinylmonomerer), ein Homopolymerisat oder ein Copolymerisat von mehr als 2 Monomeren (z.B. ein Terpolymerisat) darstellen. Diese Beispiele sollen nur erläutern, wie sich (b1) und (b2) unterscheiden können. Es gibt natürlich noch andere Kombinationen.

Besonders bevorzugte Kombinationen von (b1) und (b2) sind:

(1) b1 Copolymerisat aus Methylmethacrylat und Alkylacrylat (insbesondere Gemische aus n-Butylacrylat und tert.-Butylacrylat); b2 Polymethylmethacrylat,

(2) b1 Copolymerisat aus Styrol und Acrylnitril; b2 Poly-Methylmethacrylat,

(3) b1 Copolymerisat aus Styrol und Methylmethacrylat; b2 Copolymerisat aus Methylmethacrylat und Alkylacrylat.

Die erfindungsgemäßen Pfropfpolymerisate werden durch radikalische Pfropfcopolymerisation der Monomeren (b1) und (b2) nacheinander auf teilchenförmige Kautschuke erhalten. Dabei muß man zuerst für die Bildung des Polymerisates (b1) als Pfropfpolymer sorgen und danach das Polymer (b2) erzeugen. Die Pfropfpolymerisation von (b1) muß also weitestgehend abgeschlossen sein, bevor mit der Pfropfpolymerisation von (b2) begonnen wird; weiterhin muß natürlich die Polymerisation des Kautschuks (a) praktisch abgeschlossen sein, bevor mit der Bildung von (b) begonnen wird. Diese stufenweise Bepfropfung muß so durchgeführt werden, daß kleine, die Kautschukteilchen (a) umgebenden schalenartig angeordneten Polymerisathüllen aus (b1) und (b2), gebildet werden.

Dies wird durch besondere Maßnahmen bei der Pfropfpolymerisation erreicht:

Das Polymerisat (b1) wird durch Emulsionspolymerisation des entsprechenden Monomeren in Gegenwart einer Emulsion der Kautschukteilchen (a) erzeugt. Danach werden die so bepfropften Kautschuk-Teilchen teilweise agglomeriert oder vollständig koaguliert - unter Bildung von größeren Agglomeraten. Auf diese können

nun die Monomeren von (b2) pfropfpolymerisiert werden.

Somit ist folgendes bevorzugtes Verfahren zur Herstellung der erfindungsgemäßen Pfropfpolymerisate ein weiterer Gegenstand der Erfindung:

Ein Verfahren zur Herstellung eines Pfropfpolymerisates, in dem man

in einer ersten Stufe auf einen als Emulsion vorliegenden Kautschuk (a) in Emulsion die das Polymerisat (b1) bildenden Monomeren pfropfpolymerisiert und

in einer zweiten Stufe die das Polymerisat (b2) bildenden Monomeren auf die in Wasser suspendierten, durch Agglomeration oder vollständige Brechung der Emulsion der ersten Stufe erhaltenen Teilchen pfropfpolymerisiert.

Die Pfropfpolymerisation der ersten Stufe wird in an sich bekannter Weise bei 20 - 90° C, insbesondere 50 - 80° C, durch Initiierung mit Radikale erzeugenden Substanzen (Peroxiden, Persulfaten, Perphosphaten, Redoxinitiatorsystemen) durchgeführt, gegebenenfalls unter Zusatz von Emulgatoren, Dispergatoren und regelnden Substanzen, z.B. Mercaptanen.

Im Anschluß daran wird die erzeugte Emulsion agglomeriert oder vollständig gebrochen (koaguliert), z.B. durch Elektrolyte, Säuren, Basen, Einwirkung von Scherkräften oder Wärme, Bevorzugt koaguliert man mit wäßrigen Lösungen von Säuren und/oder Salzen bei erhöhten Temperaturen, insbesondere bei Temperaturen zwischen 30° C und 100° C, Dadurch wird eine heterogene Aufschlämmung oder Suspension des Polymerisats in Form diskreter Polymerisatpartikel verschiedenster Form und Größe in einem wäßrigen Medium erhalten. Form und Größe der Teilchen lassen sich durch Wahl der Parameter beeinflussen.

In die Polymerisatauftchlämmung oder -suspension werden dann, vorzugsweise bei ca. 30 - 100° C, die Pfropfmonomeren (b2), gegebenenfalls zusammen mit Reglern, Radikalinitiatoren (insbesondere wasserlöslichen Persulfaten) oder Antioxidantien, eingebracht und radikalisch polymerisiert. Anschließend wird das erfindungsgemäße Pfropfpolymerisat isoliert, z.B. durch Filtrieren oder Zentrifugieren, und danach getrocknet. Das Verfahren kann diskontinuierlich oder kontinuierlich durchgeführt werden.

Auch wenn die erfindungsgemäßen Pfropfpolymerisate nichtgepfropfted Polymerisat enthalten, soll unter "Pfropfpolymerisat" - unabhängig vom Pfropfgrad - das gesamte Reaktionsprodukt verstanden worden, das durch Polymerisation der Pfropfmonomeren in Anwesenheit der Pfropfgrundlage entstanden ist.

Mittlerer Teilchendurchmesser $d_{50}$ ist der Durchmesser, oberhalb und unterhalb dessen jeweils 50 Gew.-%- der dispergierten Teilchen liegen. Er kann bestimmt werden durch Ultrazentrifugen-Messungen (W. Scholtan, H. Lange, Kolloid. Z. und Z. Polymere 250 (1972), 782 - 796) oder durch Elektronenmikroskopie und anschließende Teilchenauszählung (G. Kämpf, H. Schuster, Angew. Makromolekulare Chemie 14, (1970), 111 - 129) oder durch Lichtstreuungsmessungen.

Die erfindungsgemäßen Pfropfpolymerisate liegen als Pulver vor und ergeben mit thermoplastischen Polyamiden Formmassen hochwertiger, anwendungstechnischer Eigenschaften bei sehr günstigen Verarbeitungsbedingungen.

Ein weiterer Gegenstand der Erfindung sind somit thermoplastische Formmassen aus 55 - 99 (insbesondere 65 - 95) Gew.-% Polyamid und 45 - 1 (insbesondere 35 - 5) Gew.-% eines erfindungsgemäßen teilchenförmigen Pfropfpolymerisates.

Als Polyamide eignen sich alle amorphen und teilkristallinen thermoplastischen Polyamide, vorzugsweise teilkristalline Polyamide, Insbesondere kommen als teilkristalkline Polyamide Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylenhexamethylendiamin und/oder 2,4,4-Trimethylhexamethylendiamin und/oder Isophorondiamin besteht und deren Zusammensetzung bekannt ist.

Außerdem sind Polyamide zu nennen, die ganz oder teilweise aus Lactamen mit 6 - 12 C-Atomen, gegebenenfalls unter Mitverwendung einer oder mehrerer der obengenannten Ausgangskomponenten, hergestellt werden.

Besonders bevorzugte teilkristalline Polyamide sind Polyamid-6, Polyamid-6,6 und entsprechende Copolyamide.

Die Polyamide besitzen vorzugsweise eine relative Viskosität (gemessen an einer 1 gew.-%igen Lösung in m-Kresol bei 25° C) von 2,0 - 5,0, besonders bevorzugt von 2,5 bis 4,0.

Die Mischungen aus Polyamid und erfindungsgemäßem Pfropfpolymerisat können in den üblichen Mischaggregaten, wie Walzen, Knetern, Ein- und Mehrwellenextrudern hergestellt werden. Die Temperatur bei der Herstellung der Mischungen ist im allgemeinen mindestens 10° C und zweckmäßig höchstens 90° C oberhalb des Schmelzpunktes des Polyamids.

Die erfindungsgemäßen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Die erfindungsgemäßen Formmassen können bis zu 60 Gew.-%, bezogen auf die gesamte Formmasse, Füllstoffe und/oder Verstärkungsstoffe, enthalten. Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Die erfindungsgemäßen Formmassen können Flammschutzmittel in einer Menge von im allgemeinen weniger als 30 Gew.-%, bezogen auf die flammgeschützten Formmassen, enthalten.

Es kommen alle bekannten Flammschutzmittel in Frage, wie z.B. cyclische Chlorverbindungen, Melamin und dessen Salze, wie Melamincyanurat oder Melaminsulfat, roter Phosphor.

Die erfindungsgemäßen Formmassen zeichnen sich durch hohe Beständigkeit gegen praxisnahe Schlagbeanspruchung, sehr gute Verarbeitbarkeit, hohe Thermostabilität, verbesserte Alterung und verbesserte Füllbarkeit mit üblichen Füllstoffen wie Glas oder Mineralien aus.

Deshalb können die erfindungsgemäßen Formmassen zur Herstellung von Formteilen durch Spritzguß oder Extrusion dort verwendet werden, wo große mehraxiale Zähigkeit, Wärmeformbeständigkeit und Heißluftbeständigkeit gleichzeitig gefordert wird, z.B. für Teile im Motorraum von Kraftfahrzeugen und für wärmebelastete Haushaltsgeräte.

Beispiele

1) Herstellung der Kautschukpolymeren (a)

1.1) Herstellung eines Acrylatkautschuks

In einem Reaktor wird unter Rühren bei 65° C folgende Mischung vorgelegt:

| | | |
|---|---|---|
| 200 | Teile | eines Polybutadienlatex mit einer Konzentration von 38 Gew.-% und einer mittleren Teilchengröße ($d_{50}$) von 100 nm |
| 5000 | Teile | Wasser, |
| 14 | Teile | Kaliumpersulfat, |
| 0,0124 | Teile | Triallylcyanurat und |
| 399,09 | Teile | n-Butylacrylat. |

Innerhalb von 5 Stunden werden bei 63° C folgende Mischungen in den Reaktor getrennt eindosiert:

Mischung 1: 90 Teile $C_{14}$-$C_{18}$-Alkylsulfonat-Na und 11900 Teile Wasser.

Mischung 2: 23,09 Teile Triallylcyanurat und 10101 Teile n-Butylacrylat.

Anschließend läßt man 2 Stunden bei 65° C auspolymerisieren. Die gebildeten Polymerisate besitzen Gelgehalte von 85 - 95 % und mittlere Teilchendurchmesser ($d_{50}$) von 0,5 µm (Polymerisat-Gehalt im Latex: 38 %). Der Monomerumsatz beträgt mehr als 98 %.

1.2 Herstellung eines Polybutadienkautschuks

In einem Reaktor wird bei 60 - 68°C innerhalb von ca. 110 Stunden folgende Emulsion polymerisiert:

| | | |
|---|---|---|
| 100 | Teile | Butadien, |
| 70 | Teile | Wasser, |
| 1,146 | Teile | Na-Salz der disproportionierten Abietinsäure, |
| 0,055 | Teile | ethylendiamintetraessigsaures-Na, |
| 0,137 | Teile | Natriumhydroxid, |
| 0,028 | Teile | Natriumhydrogencarbonat und |
| 0,282 | Teile | Kaliumpersulfat. |

Es wird ein Latex erhalten, der Polybutadienteilchen eines mittleren Durchmessers ($d_{50}$) von 200 nm in einer Konzentration von ca. 58 % enthält. Die Kautschukteilchen besitzen Gelgehalte von 90 - 92 Gew.-% (gemessen in Toluol bei 23°C). Der Monomerumsatz beträgt mehr als 96 %.

2. Herstellung der erfindungsgemäßen Pfropfpolymerisate

2.1 In einem Reaktor werden 6710 Gew.-Teile des Latex 1.1 vorgelegt. Unter Rühren wird bei 70° C mit einer Lösung von 4 Gew.-Teilen Kaliumperoxidisulfat in 150 Gew.-Teile Wasser initiiert. Anschließend werden folgende Lösungen innerhalb von 5 Stunden in den Reaktor eindosiert:

a)

Styrol 442 Gew.-Teile
Acrylnitril 173 Gew.-Teile

b)

Na-Salz von $C_{14}$-$C_{18}$-Alkylsulfonsäure 12 Gew.-Teile
Wasser 790 Gew.-Teile.

Anschließend wird 4 Stunden bei 70° C nachgerührt. Der Latex hat einen Feststoffgehalt von 37 Gew.-%.

In einer zweiten Verfahrensstufe werden in einem Reaktor vorgelegt: 5070 Gew.-Teile Wasser und 190 Gew.-Teile Bittersalz ($M_gSO_4xH_2O$). Bei 70 - 73° C werden 2640 Gew.-Teile des obigen Latex innerhalb von 30 Minuten in die Vorlage unter gutem Rühren eindosiert. Danach wird in dieser Vorlage eine Lösung aus

146 Gew.-Teile Methylmethacrylat und
0,1 Gew.-Teile 2,6-Di.-tert.-butyl-p-methylphenol

innerhalb von 15 Minuten zudosiert.

Danach gibt man eine Lösung von 4 Gew.-Teilen Kaliumpersulfat in 190 Gew.-Teile Wasser in den Reaktor und polymerisiert 3 Stunden bei 80° C und danach 2 Stunden bei 90° C. Nach Abkühlen und Stabilisieren mit phenolischem Antioxidanz wird das Polymer abfiltriert, gewaschen und getrocknet. Das Produkt liegt als Pulver vor.

Das Produkt besteht brutto aus 70 Gew.-%. Acrylatkautschuk, 17 Gew.-%. Styrol-Acrylnitrilcopolymer und 13 Gew.-%, Polymethylmethacrylat.

2.2 Der Ansatz 2.1 wird wiederholt, als Lösung a) wird eine Mischung aus

a)

61,5 Gew.-Teilen n-Butylacrylat,
12,5 Gew.-Teilen tert.-Butylacrylat und
514 Gew.-Teilen Methylmethacrylat

eingesetzt.

Das Endprodukt besteht aus 70 Gew.-% Acrylatkautschuk, 17 Gew.-% Methylmethacrylat-n-Butylacrylat-tert.-Butylacrylat-Terpolymer und 13 Gew.-% Polymethylmethacrylat.

2.3 In einem Reaktor werden vorgelegt:

2100 Gew.-Teile Latex 1.2 und
900 Gew.-Teile Wasser.

Bei 65°C wird durch Zugabe einer Lösung aus 3,5 Gew.-Teilen Kaliumperoxidsulfat in 100 Gew.-Teile Wasser initiiert. Innerhalb von 4 Stunden läßt man nun folgende beide Lösungen getrennt in den Reaktor einlaufen:

a)

270 Gew.-Teile Methylmethacrylat,
30 Gew.-Teile Ethylacrylat.

b)

410 Gew.-Teile Wasser,
29 Gew.-Teile Na-Salz der disproportionierten Abietinsäure,
22 Gew.-Teile 1n-Natronlauge.

Anschließend läßt man 4 Stunden bei 65° C auspolymerisieren. Der Latex enthält 37 Gew.-% Polymerisat als Feststoff.

In einer weiteren Stufe werden in einem Reaktor 5000 Gew.-Teile Wasser, 150 Gew.-Teile Bittersalz und 100 Gew.-Teile Essigsäure vorgelegt. Nach Aufheizen auf 70° C gibt man 2640 Gew.-Teile des obigen Latex innerhalb von 30 Minuten unter gutem Rühren in den Reaktor. Dann wird innerhalb von 15 Minuten eine Lösung aus

150 Gew.-Teile Methylmethacrylat und
7 Gew.-Teile des Monomeren

folgender Struktur:

$$CH_2=\underset{\underset{\displaystyle CH_3}{|}}{C}-COOC_2H_4OOCNHCH_3$$

in den Reaktor eindosiert. Danach aktiviert man die Pfropfpolymerisation durch Zugabe von 4 Gew.-Teilen Kaliumperoxidisulfat in 190 Gew.-Teilen Wasser. Innerhalb von 2 Stunden bei 80° C und 1 Stunde bei 90° C ist die Polymerisation beendet. Nach Abkühlen wird das Polymer filtriert, gewaschen und getrocknet. Das Produkt fällt als Pulver aus.

Das Produkt besteht brutto aus 73 Gew.-% Polybutadienkautschuk, 15 Gew.-% Methylmethacrylat-Ethylacrylat-Kautschuk und 12 Gew.-% des speziellen Methylmethacrylat-Urethanmonomercopolymerisates.

3. Vergleichspfropfpolymerisat

3.1 Das Beispiel 2.1 wird wiederholt, wobei als Lösung a) anstatt Styrol/Acrylnitril-Gemisch nur 675 Gew.-Teile Methylmethacrylat verwendet werden.

Das resultierende Produkt besteht bruttomäßig aus 70,75 Gew.-% Acrylatkautschuk und 30 Gew.-% Polymethylmethacrylat.

3.2 Das Beispiel 2.2 wird wiederholt, wobei als Monomer der zweiten Verfahrensstufe eine Mischung aus 128 Gew.-Teilen Methylmethacrylat, 2,98 Gew.-Teilen tert.-Butylacrylat und 14,6 Gew.-Teilen n-Butylacrylat eingesetzt werden.

Das resultierende Produkt besteht bruttomäßig aus 70,73 Gew.-%- Acrylatkautschuk und 29,95 Gew.-% Methylmethacrylat-tert.-Butylacrylat-n-Butylacrylat-Terpolymer.

4. Herstellung der Formmassen

Verwendete Polyamide:

Typ I: Polyamid-6 mit einer relativen Viskosität (gemessen an einer 1 gew.-%igen Lösung in m-Kresol bei 25°C) von 3,5

Typ II: Copolyamid aus Polyamid-6 und Polyamid-6,6 (95:5) mit einer relativen Viskosität von 3,0, gemessen wie I.

Auf einem kontinuierlich arbeitenden Doppelwellenextruder wurde das Pfropfpolymerisat in die Polyamid-Schmelze eingearbeitet und homogenisiert. Gegebenenfalls erfolgte die Zugabe von Glasfasern über einen zweiten Einfüllstutzen.

Die Zylindertemperaturen wurden so gewählt, daß die in Tabelle 1 angegebenen Massetemperaturen eingehalten wurden. Der Schmelzstrang wurde vor dem Austritt aus der Düse entgast, in Wasser abgekühlt und getrocknet.

Von den Formmassen wurden auf einer üblichen Spritzgußmaschine ASTM-Stäbe (Beispiele 1, 3, 4) bzw. Normkleinstäbe (Beispiele 2 und 5) hergestellt. Geprüft wurde daran die Raumtemperatur-Kerbschlagzähigkeit nach Izod (Beispiele 1, 3, 4) bzw. Charpy (DIN 53 543, Beispiele 2 und 5).

**Tabelle 1**

| Beispiele | Zusammensetzung | | | | | Kerbschlagzähigkeit (23° C) | |
|---|---|---|---|---|---|---|---|
| | Polyamid | | Pfropfpolymerisat | | Glasfaser | Izod | Charpy |
| | Typ | (%) | Beispiel | (%) | Silenka 8041 (%) | (J/m) | (KJ/m²) |
| 1 | I | 80 | 2.2 | 20 | - | 833 | - |
| 2 | II | 75 | 2.2 | 5 | 20 | - | 16,4 |
| Vergleichsbeispiele | | | | | | | |
| 3 | I | 80 | 3.1 | 20 | - | 155 | - |
| 4 | I | 80 | 3.2 | 20 | - | 203 | - |
| 5 | II | 75 | 3.2 | 5 | 20 | - | 13,6 |

Die Massetemperaturen betrugen 280° C (Polyamid Typ I) bzw. 290° C (Typ II)

## Patentansprüche

1. Verfahren zur Herstellung thermoplastisch verarbeitbarer Pfropfpolymerisate aus

(a) 50 - 90 Gew.-Teilen eines teilchenförmigen, wenigstens partiell vernetzten Kautschuk mit Gelgehalt größer als 30 Gew.-% und mittelrem Teilchendurchmesser von 80-2000 nm als Pfropfgrundlage und

(b) 50 - 10 Gew.-Teilen von darauf gepfropften Polymerisaten von Vinylmonomeren, welche sich aus

b1) 80 - 20 Gew.-% eines Polymerisats von Styrol, α-Methylstyrol, Acrylnitril, Alkylacrylat, Alkylmethacrylat oder Mischungen daraus und

b2) 20 - 80 Gew. -% eines Polymerisats von Alkylmethacrylat, Alkylacrylat, Acrylnitril oder Mischungen daraus zusammensetzen,

wobei die Polymerisat b1) und b2) voneinander verschieden sind, in dem man auf einen als Emulsion vorliegenden Kautschuk (a) die das Polymerisat (b1) bildenden Monomeren bei Temperaturen von 20 bis 90 °C mit Hilfe von Radikale erzeugenden Initiatoren und gegebenenfalls unter Zusatz von Emulgatoren, Dispergatoren und/oder Reglern in Emulsion pfropfpolymerisiert, die so erhaltene Emulsion durch Einwirkung von Elektrolyten, Scherkräften oder Wärme agglomeriert oder koaguliert und in einer zweiten Stufe die das Polymerisat (b2) bildenden Monomeren auf die in Wasser suspendierten Teilchen der agglomerierten oder koagulierten Emulsion bei Temperaturen von 30 bis 100 °C mit Hilfe von Radikalinitiatoren und gegebenenfalls Reglern pfropfpolymerisiert und sodann das gebildete Pfropfpolymerisat abtrennt und trocknet.

2. Pfropfpolymerisat erhalten nach dem Verfahren des Anspruchs 1.

3. Verwendung der nach Anspruch 1 erhaltenen Pfropfpolymerisate als Zusatz zu Polyamid in einer Menge von 45 bis 1 Gew.-%, bezogen auf die Mischung.

## Claims

1. A process for the production of thermoplastically processible graft polymers of

(a) 50 to 90 parts by weight of a particulate, at least partly crosslinked rubber having a gel content of more than 30% by weight and an average particle diameter of 80 to 2,000 nm as the graft base and

(b) 50 to 10 parts by weight of polymers grafted thereon of vinyl monomers which consist of

b1) 80 to 20% by weight of a polymer of styrene, α-methyl styrene, acrylonitrile, alkyl acrylate, alkyl methacrylate or mixtures thereof and

b2) 20 to 80% by weight of a polymer of alkyl methacrylate, alkyl acrylate, acrylonitrile or mixtures thereof,

the polymers b1) and b2) being different from one another, in which the monomers forming the polymer (b1) are emulsion-graft-polymerized onto the rubber (a) present as an emulsion at temperatures of 20 to 90°C in the presence of radical-forming initiators and optionally in the presence of emulsifiers, dispersants and/or regulators, the emulsion obtained is agglomerated or coagulated by the action of electrolytes, shear forces or heat and, in a second stage, the monomers forming the polymer (b2) are graft-polymerized onto the particles - suspended in water - of the agglomerated or coagulated emulsion at temperatures of 30 to 100°C in the presence of radical initiators and, optionally, regulators and the graft polymer formed is then separated off and dried.

2. A graft polymer obtained by the process claimed in claim 1.

3. The use of the graft polymers obtained by the process claimed in claim 1 as an additive to polyamide in a quantity of 45 to 1% by weight, based on the mixture.

## Revendications

1. Procédé de production de polymérisats greffés susceptibles de mise en oeuvre thermoplastique à partir de

(a) 50 à 90 parties en poids d'un caoutchouc en particules, au moins partiellement réticulé, ayant une teneur en gel supérieure à 30% en poids et un diamètre moyen des particules de 80 à 2000 nm comme substrat de greffage et

(b) 50 à 10 parties en poids de polymérisats de monomères vinyliques greffés sur ce substrat, qui se composent de

b1) 80 à 20% en poids d'un polymérisat de styrène, d'α-méthylstyrène, d'acrylonitrile, d'acrylate

d'alkyle, de méthacrylate d'alkyle ou de leurs mélanges et de

b2) 20 à 80% en poids d'un polymérisat de méthacrylate d'alkyle, d'acrylate d'alkyle, d'acrylonitrile ou de leurs mélanges,

les polymérisats b1) et b2) étant différents l'un de l'autre,
dans lequel on polymérise par greffage en émulsion sur un caoutchouc (a) se présentant sous forme d'émulsion les monomères formant le polymérisat (b1) à des températures de 20 à 90°C à l'aide d'initiateurs de radicaux et le cas échéant avec addition d'émulsionnants, de dispersants et/ou de régulateurs, on agglomère ou on coagule l'émulsion ainsi obtenue par l'action d'électrolytes, de forces de cisaillement ou de la chaleur et on polymérise par greffage dans une seconde étape les monomères formant le polymérisat (b2) sur les particules, en suspension dans l'eau, de l'émulsion agglomérée ou coagulée à des températures de 30 à 100°C à l'aide d'initiateurs radicalaires et le cas échéant de régulateurs, puis on sépare et on sèche le polymérisat greffé formé.

2. Polymérisat greffé obtenu par le procédé suivant la revendication 1.

3. Utilisation des polymérisats greffés obtenus suivant la revendication 1 comme addition à un polyamide en une quantité de 45 à 1% en poids, par rapport au mélange.